# EUROPEAN PATENT SPECIFICATION

(11) **EP 3 292 925 B1**
(45) Date of publication and mention of the grant of the patent: **12.02.2020**
(21) Application number: 15891325.1
(22) Date of filing: 26.08.2015
(51) Int. Cl.: B22D 11/108, B22D 11/111, C22C 38/04

(54) **A CONTINIOUS CASTING METHOD USING THE MOLD FLUX**
EIN STRANGGIESSVERFAHREN UNTER VERWENDUNG DES FORMFLUSSMITTELS
UN PROCÉDÉ DE COULÉE CONTINUE UTILISANT UN ADDITIF DE COULÉE

(30) Priority: 04.05.2015 KR 20150062686
(43) Date of publication of application: 14.03.2018
(73) Proprietor: Posco, Pohang-si, Gyeongsangbuk-do 37859 (KR)
(72) Inventor: CHUNG, Tae In, Pohang-si Gyeongsangbuk-do 37591 (KR); HAN, Sang Woo, Pohang-si Gyeongsangbuk-do 37590 (KR)
(74) Representative: Zech, Stefan Markus
(86) International application number: PCT/KR2015/008957
(87) International publication number: WO 2016/178461

(56) References cited:
- JP-A- H0 852 550
- JP-A- H07 276 019
- JP-A- 2003 094 150
- JP-A- 2006 289 383
- JP-B2- 2 917 824
- KR-A- 20040 051 175
- KR-A- 20130 073 355
- R. Y. Chen ET AL: "Copper Enrichment Behaviours of Copper-containing Steels in Simulated Thin-slab Casting Processes", ISIJ International, 1 January 2005 (2005-01-01), pages 807-816, XP055451880, Retrieved from the Internet: URL:https://www.jstage.jst.go.jp/article/i sijinternational/45/6/45_6_807/_pdf [retrieved on 2018-02-16]

## Description

### [Technical Field]

The present invention relates to a continuous casting method using a mold flux, and more particularly to a continuous casting method using a mold flux, to allow suppression of surface defects of the slab.

### [Background Art]

Generally, the slab is manufactured by cooling molten steel accommodated in the mold through the cooling zone. For example, in a continuous casting process, molten steel is injected into the mold having a certain internal shape defined therein, and the slab, which is semi-solidified in the mold, is continuously drawn through a bottom outlet of the mold, thereby to produce semi-products various shapes such as slabs, blooms, billets, beam blanks, and the like.

In this casting process, the slab is primarily cooled in the mold, and after passing through the mold, water is sprayed into the slab, whereby the slab is secondarily cooled. This is causing the slab to be solidified. The primary cooling in the mold is affected by the flow of molten steel in the mold, the melting behavior of the mold flux, and the uniform penetration ability between the mold and the slab.

On the other hand, in the slab produced by the casting process, defects are generated due to various factors. Such defects may be caused by molten steel flow in the mold, load caused by a roll during the casting and load caused by drawing during the casting. Among these, most of the defects caused by the molten steel flow exist in the mixture form of inclusion and slag. On the other hand, defects caused by loads due to the roll or drawing during the casting lead to surface cracks of the slab. In this connection, cracks formed in the slab surface may be caused by the primary cooling of the molten steel in the mold.

Recently, copper (Cu) has been added to marine structural steels in order to secure weldability and low temperature toughness. However, in the process of casting the slab at a high temperature of about 1500° C, the copper dissolves into the surface portion of the slab and penetrates into the grain boundary of the steel, thereby causing a crack. Further, the susceptibility to cracks increases sharply by the copper in steel. The main reason for this is that copper is enriched by selective oxidation at high temperatures during casting or during heating for rolling. The copper is also very low in oxygen affinity thereof during oxygen-refining, which makes it difficult to remove the copper, and therefore, even after the steel becomes scrap, the copper is constantly concentrated into the scrap. Therefore, when such scrap is recycled in an iron producing process, the above-described phenomenon occurs repeatedly. Adding to the steel nickel (Ni) 1.5 to 2 times relative to the copper content in the steel increases the solubility of the copper into the slab and thus inhibits the copper from dissolving into the slab surface portion.

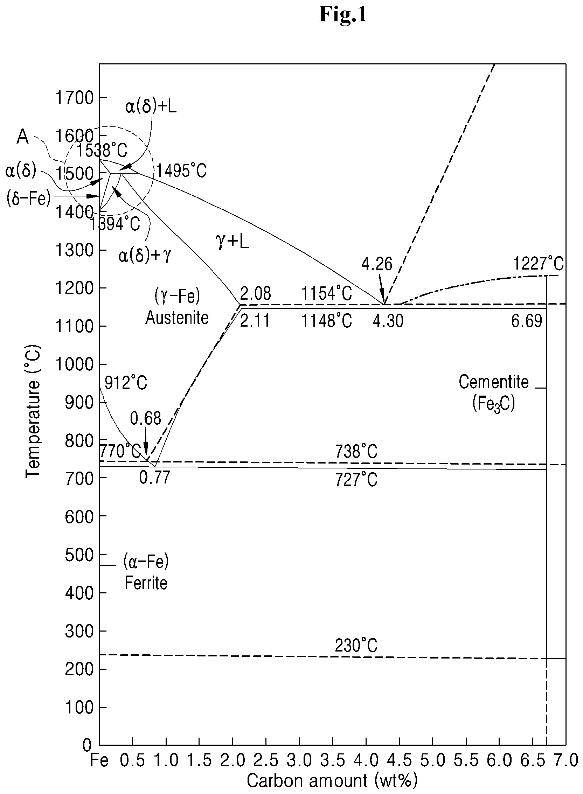

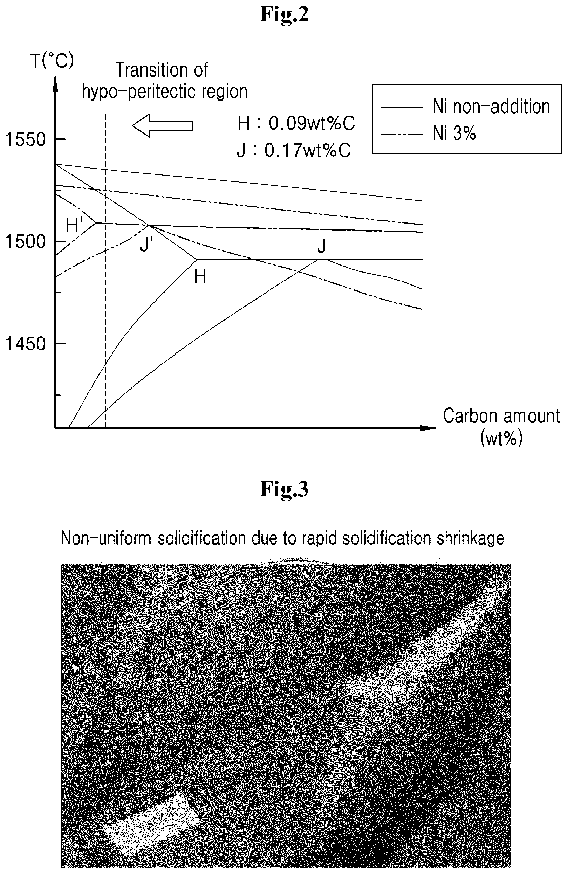

Referring to the Fe-C phase diagram shown in FIG. 1, steel is cast into an alpha-ferrite (α(δ)) phase at a temperature of 1400° or higher in a low-carbon region and exhibits stable solidification behavior. However, as shown in FIG. 2, when the nickel content is less than 3% by weight, a gamma austenite (gamma-Fe) range is widened, and a hypo-peritectic reaction may occur in which a liquid phase and a delta phase are transformed to a delta phase and a gamma phase.

The hypo-peritectic reaction refers to a reaction in which the steel is transformed into a solid phase without a residual liquid phase at a temperature below the peritectic temperature, in which the steel has a large solidification shrinkage and is crack-sensitive. Thus, as shown in FIG. 3, the slab produced by the hypo-peritectic reaction has an increased non-uniform solidification in the mold due to the severe solidification shrinkage, and, thus, a convex-concave structure may be formed in the slab surface portion, thereby to generate the cracks. KR 2004 0051175 A discloses a continuous casting mold flux for preventing surface defects of low carbon steel casting slabs. JP 2 917824 B2 discloses a continuous casting method for producing a slab, in which molten steel is supplied to a mold. R. Y. Chen e.a.: "Copper Enrichment Behaviours of Copper-containing Steels in Simulated Thin-slab Casting Processes", ISIJ International, 1 January 2005, p. 807-816 (XP055451880) discusses a slab produced by casting molten steel.

### [Technical Problem]

The present invention is to provide a continuous casting method using a mold flux to allow a Ni-enriched layer (hereinafter, referred to as a Ni-enriched layer) to be formed in a surface portion of a slab.

The present invention is to provide a continuous casting method using a mold flux which can suppress and prevent penetration of copper into a grain boundary of a slab.

The present invention is to provide a continuous casting method using a mold flux to allow decrease in an amount of a slab defect-suppressing agent to be added to molten steel to inhibit the slab defect.

The present invention is to provide a continuous casting method using a mold flux capable of increasing the productivity and efficiency of the slab production process.

### [Technical Solution]

A continuous casting method for producing a slab by supplying molten steel to a mold, in accordance with one embodiment of the present invention includes forming a Ni coating layer made of a nickel oxide in a surface portion of the slab by supplying a mold flux onto a top face of the molten steel, wherein the mold flux contains Si02, CaO, MgO, AI203, Na20, F, and nickel (Ni) oxide, wherein the nickel (Ni) oxide has a content in a range from 10 wt% exclusive to 40 wt% with respect to a total weight of the mold flux,wherein the molten steel contains copper,wherein a Ni concentration in the surface portion is at least 1.5 times greater than a Cu concentration in the surface portion.

The mold flux may contain MgO at an amount of 1.0 to 1.5 wt%, Al₂O₃ at an amount of 5 to 7 wt%, Na₂O at an amount of 3 to 5 wt% and F at an amount of 5 to 7 wt%, respectively, based on the total weight of the mold flux, wherein the mold flux contains CaO and SiO₂.

CaO content/SiO₂ content by weight may be in a range of 0.8 to 1.4.

The mold flux may be injected into the molten steel at an injection ratio of 0.1 kg to 1 kg of the mold flux per 1000 kg of the molten steel.

### [Advantageous Effects]

According to the continuous casting method using the mold flux the solidification behavior of the slab surface may be controlled such that defects such as cracks formed in the slab may be suppressed or prevented. For example, when producing the slab using molten steel containing copper (Cu), it is possible to suppress the cracks generated on the slab surface by the copper component. That is, a Ni oxide-enriched layer with a low oxygen affinity is formed in the surface portion of the slab, thereby to control the solidification behavior of the steel such that a hyper-peritectic reaction occurs with little solidification shrinkage in the slab surface portion. As a result, defects that may otherwise occur as a result of the concentration of copper from the molten steel into the slab surface portion may be suppressed. Thus, it is possible to reduce the amount of a metal-containing material used as compared with conventional art in which a material containing a metal such as Ni is mixed with a molten steel in order to prevent defects that may be caused by copper, thereby preventing an increase in the manufacturing cost due to the use of a material containing a high-priced metal.

### [DESCRIPTION OF DRAWINGS]

FIG. 1 is a Fe-C state diagram for illustrating a problem of a continuous casting method according to the prior art.
FIG. 2 shows a change in a Fe-C state diagram when Ni is added to molten steel.
FIG. 3 is a photograph of a slab produced by a continuous casting method according to the prior art.
FIG. 4 is an oxygen affinity graph for illustrating a metal-containing material constituting the mold flux according to an embodiment of the present invention.
FIG. 5 is a graph showing a change in a melting point of NiO in molten steel based on a NiO content in the mold flux.
FIG. 6 is a graph showing NiO concentrations with increasing distance from a slab surface, based on the NiO content in the mold flux, and comparing maximum oxidation depths due to oxidation during casting.
FIG. 7 is a graph showing oxide layer formation thicknesses and oxidized slab thicknesses during high temperature oxidation.
FIG. 8 is a schematic view of a continuous casting apparatus to execute a continuous casting method according to an embodiment of the present invention.
FIG. 9 is a view showing a result of Ni-enriched layer distribution in a surface portion of a slab produced by a continuous casting method using mold flux according to an embodiment of the present invention.
FIG. 10 is a photograph and a schematic view of slabs produced by a continuous casting method according to the prior art and a continuous casting method according to the embodiment of the present invention.

### [DETAILED DESCRIPTIONS]

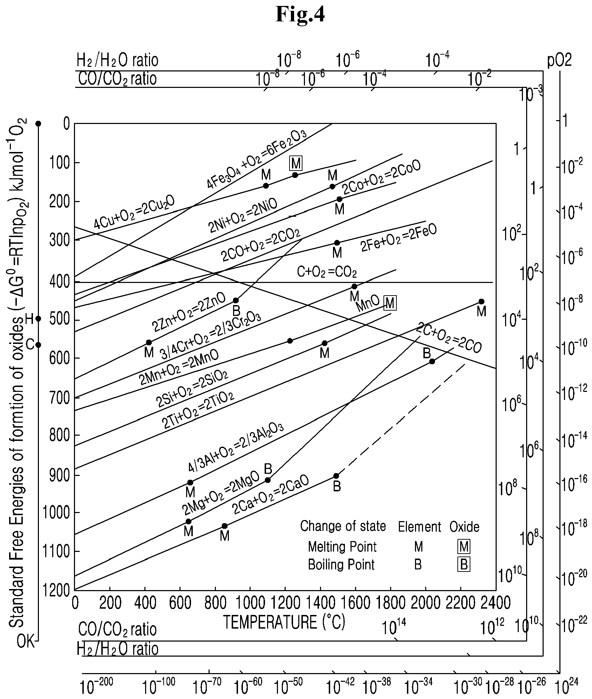

Hereinafter, embodiments of mold flux, a continuous casting method using the mold flux, and a slab produced using the method according to an embodiment of the present invention will be described in detail with reference to FIGS. 4 to 10.

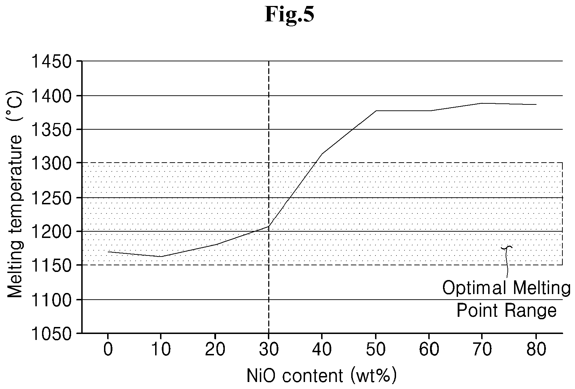

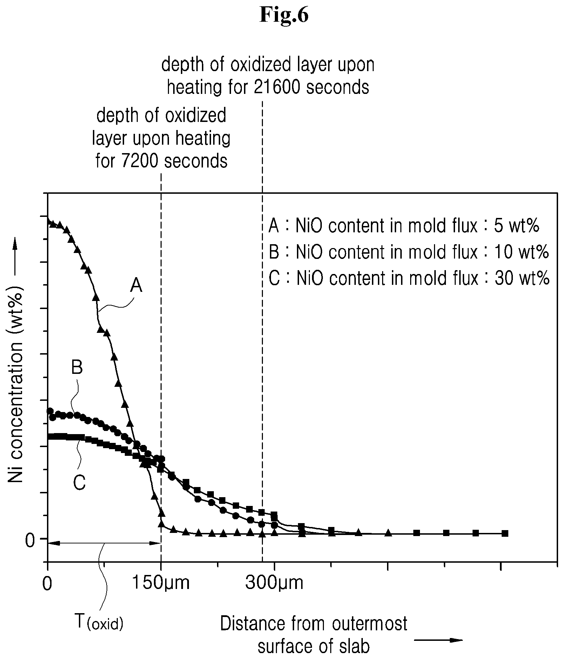

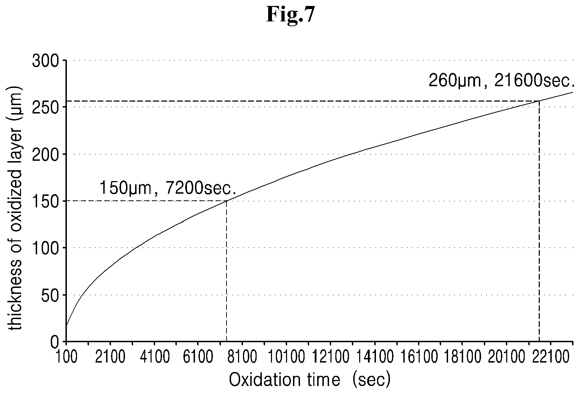

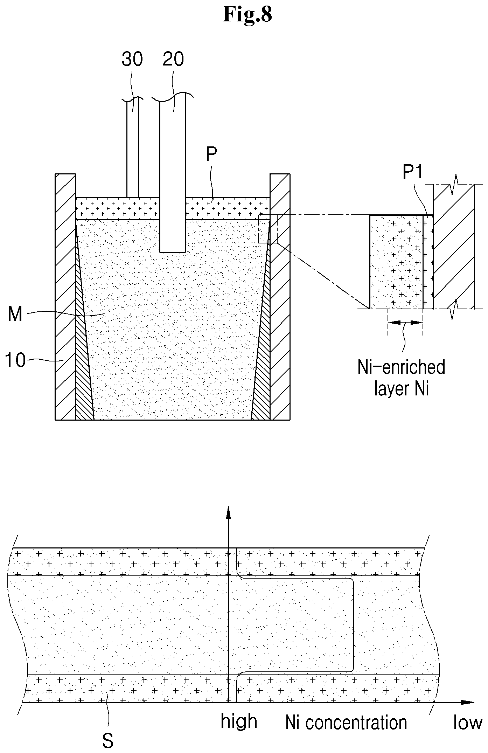

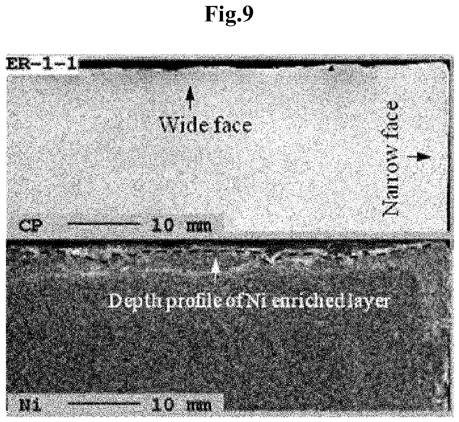

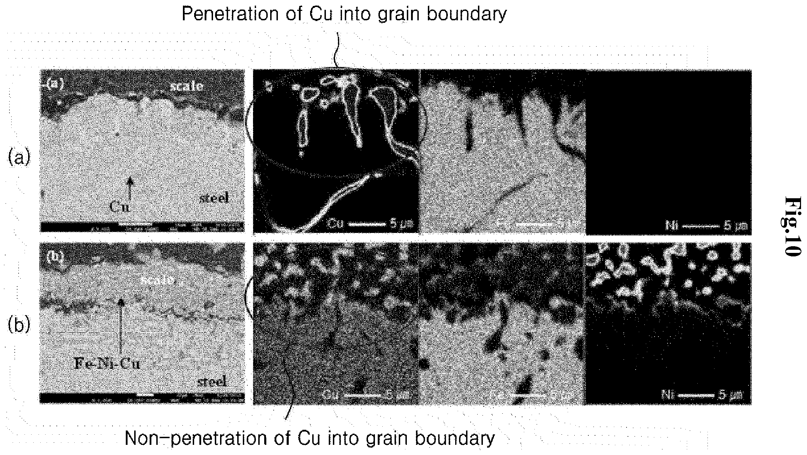

In this connection, FIG. 4 is an oxygen affinity graph for illustrating a metal-containing material constituting the mold flux according to an embodiment of the present invention. FIG. 5 is a graph showing a change in a melting point of NiO in molten steel based on a NiO content in the mold flux. FIG. 6 is a graph showing NiO concentrations with increasing distance from a slab surface, based on the NiO content in the mold flux, and comparing maximum oxidation depths due to oxidation during casting. FIG. 7 is a graph showing oxide layer formation thicknesses and oxidized slab thicknesses during high temperature oxidation. FIG. 8 is a schematic view of a continuous casting apparatus to execute a continuous casting method according to an embodiment of the present invention. FIG. 9 is a view showing a result of Ni-enriched layer distribution in a surface portion of a slab produced by a continuous casting method using mold flux according to an embodiment of the present invention. FIG. 10 is a photograph and a schematic view of slabs produced by a continuous casting method according to the prior art and a continuous casting method according to the embodiment of the present invention.

The mold flux P according to an embodiment of the present invention is injected into the mold 10 during the casting of the molten steel M to suppress surface defects of the slab produced by continuous casting. More specifically, the mold flux P acts as an additive added to the molten steel M in order to form a Ni high-concentration layer (hereinafter referred to as Ni-enriched layer), via reduction of nickel oxide (NiO), in the surface of the slab when producing the slab.

In particular, when casting the slab using molten steel M containing Cu (copper), the mold flux (P) in accordance with the present invention may be injected into the molten steel M in order to form a Ni-enriched layer in the surface portion of the slab such that the copper component in the molten steel is prevented from being concentrated into the slab surface portion and, thus, the copper is prevented from penetrating into the grain boundary of the slab, thereby to suppress slab cracks.

To this end, the mold flux P according to the embodiment of the present invention comprises a composition containing SiO₂, CaO, MgO, Al₂O₃, Na₂O, F and nickel oxide (NiO). The nickel oxide is present at an amount of 10 wt% exclusive to 40 wt% with respect to a total weight of the composition of the mold flux P. That is, the mold flux (P) refers to a composition containing predetermined components in predetermined percentages. The composition of the mold flux P comprises a first composition containing SiO₂, CaO, MgO, Al₂O₃, Na₂O, and F, and a second composition containing the nickel oxide (NiO). The second composition is included at a range of 10 wt% exclusive to 40 wt% with respect to the total weight of the first composition and the second composition. The first composition contains MgO at an amount of 1.0 to 1.5 wt%, Al₂O₃ at an amount of 5 to 7 wt%, Na₂O at an amount of 3 to 5 wt% and F at an amount of 5 to 7 wt%, respectively, based on the total weight of the composition of the mold flux (P). The first composition further contains CaO and SiO₂ wherein CaO content/SiO₂ content by weight is in a range of 0.8 to 1.4.

Hereinafter, each of components constituting the mold flux according to an embodiment of the present invention, the reason for adding such a component, and a content range of each of these components will be described.

### 1) NiO : 5 wt% to 40 wt%

Nickel oxide is added to the mold flux to improve the solubility of copper in the slab and to affect the lubrication function, which is the basic function of the mold flux. In this connection, referring to FIG. 4, nickel (Ni) is a metal with a low oxygen affinity. Thus, in a state added to the mold flux, the nickel is injected into the molten steel such that the solidification behavior of the molten steel is controlled to cause a hypo-peritectic reaction leading to small solidification shrinkage in the slab surface portion.

The nickel oxide is injected to the molten steel in a state added to the mold flux. Then, when casting the molten steel, the nickel oxide is reduced to nickel (Ni) in the surface portion of the slab, which, in turn, diffuses inwardly from the surface of the slab by a predetermined depth. This diffused nickel forms a Ni high-concentration layer in the slab surface portion. More specifically, the molten steel has almost no free oxygen. When the nickel oxide is injected into such molten steel, the nickel oxide reacts with calcium (Ca), aluminum (Al), silicon (Si) and iron (Fe), etc. contained in the molten steel, the nickel oxide is reduced into a nickel which is at an ionic state. The reaction heat generated at this time may provide molten steel-face warming effect. The nickel in the ionic state diffuses into the surface portion of the slab and thus may form the Ni high-concentration layer in this surface portion.

In this connection, nickel oxide may be included in the mold flux in the content range of 10 wt% exclusive to 40 wt%. Hereinafter, the reason why the content of the nickel oxide is limited to the above range is explained.

FIG. 5 shows the melting temperature of the mold flux based on the content (wt%) of nickel oxide (NiO) in the mold flux. FIG. 5 shows the melting temperature (°C) of the mold flux in the molten steel when the content of nickel oxide in the mold flux was varied from 0 to 80 wt%.

In this connection, when the melting point of the mold flux is lower than 1150 °C, the flux of mold flux into the solidified shell and the mold increases and, thus, the mold flux-type inclusion defect in the molten steel may occur. Further, when the melting point of the mold flux is higher than 1300 °C, the mold flux cannot easily melt using the heat of the molten steel, so that an appropriate amount of the flux of the mold flux cannot be achieved. This increases the frictional resistance in the mold and thus increases the likelihood of operating accidents such as constrained breakout. Therefore, the optimum melting point range of the mold flux (P) in the molten steel is 1150 to 1300 °C.

The melting temperature (°C) according to the change of the content (wt%) of the nickel oxide, based on the optimum melting point range (1150 to 1300 °C) of the mold flux in the molten steel is as follows: it may be confirmed that the melting temperature of the mold flux is 1300 °C or higher when the amount of the added nickel oxide exceeds the upper limit value, that is, 40 wt% of the content thereof in the mold flux. In addition, the lubrication function, which is the basic function of the mold flux, deteriorates, and casting cannot be performed. Further, when the amount of nickel oxide added is less than 5 wt%, which is the lower limit value of the content thereof in the mold flux, it may become difficult to uniformly form the Ni high-concentration layer in the surface portion of the slab cast using the mold flux.

Referring to FIG. 6 and FIG. 7 in detail, FIG. 6 shows a change in Ni concentration in the slab surface portion based on the NiO content in the mold flux. Figure 7 shows the depth of oxidation in the slab for 7200 seconds to 21600 seconds as the general heating time of the slab. In this connection, this heating time refers to the time to reheat the slab in order to roll the produced slab, and is determined by the size of the slab.

Referring to FIG. 7, the typical minimum reheating temperature of the slab is 7200 seconds. At 7200 seconds, the slab layer of about 150 µm is formed as an oxide layer. At the maximum reheating time of 21600 seconds, the surface portion of the slab becomes an oxide layer to a depth of 260 µm thereof.

Referring to FIG. 6, as the distance from the slab outermost surface toward the inside increases, the concentration of Ni in the slab gradually decreases. In this connection, when the content of the nickel oxide in the mold flux is less than 5 wt% (A), the Ni-enriched layer may not reach the 150 micrometer, that is, the thickness of the Ni-enriched layer may not exceed the thickness of the oxide layer T(O_{xid}) generated from the slab surface in the production of the slab. In other words, since the NiO content in the mold flux is very small, the diffusion distance of Ni ions from the surface portion of the slab to the inside after the nickel oxide is reduced to the Ni ions is shortened. As a result, the Ni-enriched layer formed inwardly from the outermost surface of the slab to a predetermined depth may not reach the thickness of the oxide layer T(O_{xid}) of the slab.

In other words, by including the nickel oxide in the mold flux in excess of 10 wt%, the Ni-enriched layer can be formed beyond the 260 µm depth of the oxide layer formed when the reheating time of the slab is 21600 seconds or more.

### 2) CaO/SiO₂ : 0.8 to 1.4

The reason for limiting the ratio value of CaO/SiO₂ to 0.8 to 1.4 is that the ratio of CaO/SiO₂ affects the viscosity of the molten steel. That is, when the ratio of CaO/SiO₂ is less than 0.8, the viscosity of molten steel is excessively increased, and, thus, the inflow of the molten flux into the slab surface portion is reduced. Due to the decrease in the inflow amount, this may cause an operation accident such as constrained breakout.

When the ratio of CaO/SiO₂ ratio exceeds 1.4, the solidification temperature of the mold flux P becomes high, and, thus, it is impossible to stably maintain the un-reacted mold flux layer on the upper face of the mold during casting. This phenomenon may result in a local increase in the amount of inclusion defect due to reoxidization via the intermittent exposure of the naked molten steel during casting. This may lead to a surface defect in the slab.

### 3) Al₂O₃ : 5 to 7 wt%

Al₂O₃ serves to increase the viscosity of the mold flux (P), while at the same time it acts to raise the solidification temperature. Since the amount of unavoidable oxides contained in the molten slag is increased by the oxidation reaction due to Al addition, Al must be added at a decreased addition amount thereof with respect to Al₂O₃.

In this connection, when the content of Al₂O₃ is less than 5 wt%, viscosity increase effect and solidification temperature increase effect are insufficient. Further, when the content of Al₂O₃ serves exceeds 7 wt%, the viscosity and the solidification temperature become excessively high, and, thus, the inflow of the molten flux to the slab surface is reduced. As a result, the crystallization at the time of solidification becomes unstable, which makes it difficult to control the stable heat transfer to the mold. This may result in a solidification imbalance of the molten steel, which may lead to increased defects.

### 4) MgO : 1.0 to 1.5 wt%

MgO plays a role in increasing the solidification temperature of the mold flux or controlling the physical properties such as crystallization characteristics during solidification. In this connection, when the content of MgO exceeds 1.5 wt%, the solidification temperature becomes too high, and, thus, the inflow of molten mold flux into the slab surface is reduced, and, further, the crystallization during solidification becomes unstable, and, thus, stable heat transfer control becomes difficult, resulting in a solidification imbalance of the molten steel. Further, when the content of MgO is less than 1.0 wt%, the solidification temperature cannot be sufficiently secured.

### 5) Na₂O : 3 to 5 wt% and F : 5 to 7 wt%

Na₂O and F act as a network modifier, which cuts the silicate structure and thus lowers the viscosity and solidification temperature. However, when the contents of Na2O and F exceed 5 wt% and 7 wt%, respectively, the viscosity and solidification temperature become too low, thereby to increase the amount of the inflow of the mold flux, but to deepen the oscillation mark and thus to increase the molten iron in the immersion nozzle.

Further, when the contents of Na₂O and F are less than 3 wt% and 5 wt%, respectively, the viscosity and solidification temperature become excessively high, such that the inflow amount of the mold flux into the slab surface decreases. This decrease may lead to high possibility of work accidents such as the constrained breakout. Therefore, the contents of Na₂O and F may be defined as the above ranges, respectively.

Hereinafter, the continuous casting method using the mold flux according to an embodiment of the present invention and the slab produced using this method will be described in detail with reference to FIG. 8. The mold flux as described above is used in the casting of molten steel containing copper (Cu).

A continuous casting method for producing a slab by supplying molten steel to a mold in according to an embodiment of the present invention may include forming a coating layer (hereinafter, Ni-enriched layer) made of a nickel oxide in a surface portion of the slab S by supplying a mold flux P onto a top face of the molten steel M, wherein the mold flux contains SiO₂, CaO, MgO, Al₂O₃, Na₂O, F, and nickel (Ni) oxide, wherein the nickel (Ni) oxide has a content in a range from 5 wt% to 40 wt% with respect to a total weight of the mold flux P.

First, molten steel M is prepared, and, then, the prepared molten steel M is fed into the mold 10 of the continuous casting apparatus for the slab S to be produced via a casting process. In this connection, the molten steel M, which may be used relative to the mold flux P according to an embodiment of the present invention may be composed of Fe, C, Si, Mn, Cu and other inevitably contained components. More specifically, the molten steel M comprises 0.01 to 0.4 wt% of C, 0.1 to 2 wt% of Cu, 0.1 to 2 wt% of Si, 0.1 to 2 wt% of Mn, the remainder being Fe and other inevitable impurities. That is, the molten steel M having the content ranges of the above components may allow the slab produced from the molten steel M as a product to have toughness that may be effective in a cryogenic environment. In particular, the molten steel M having the content ranges of the above components may allow the final slab to have the high toughness at the welded portion. This molten steel makes it possible to produce the slab in which the mold flux according to the present invention can realize the effect of inhibiting and preventing the elution of Cu.

Further, during the casting process in the mold 10, the mold flux P is injected onto the top face of the molten steel (M) in the mold 10, wherein the mold flux P may include a composition containing SiO₂, CaO, MgO, Al₂O₃, Na₂O, F, and nickel (Ni) oxide, wherein the nickel (Ni) oxide has a content in a range from 10 wt% exclusive 40 wt% with respect to a total weight of the composition of the mold flux.

The continuous casting method includes a step in which the mold flux having the above nickel oxide content range is injected onto a top face of molten steel (M) in the continuous casting process of molten steel M, a step which the nickel oxide reacts with the elements in the molten steel M and thus the nickel oxide is reduced to Ni ion, and a step in which the reduced Ni ions are diffused from the slab S surface inwardly in a thickness direction thereof to form the Ni-enriched layer having a high Ni concentration in the surface portion of the slab S. Thus, the slab produced by the casting the molten may include the surface portion from an outermost surface of the slab to a predetermined distance therefrom inwardly in a thickness direction of the slab; and an inner portion from the predetermined distance to a middle point in the thickness direction of the slab, wherein a Ni concentration is higher in the surface portion than in the inner portion.

Further, the nickel oxide in the mold flux may inhibit surface defects caused by the copper component in the slab (S) and the solidification behavior of the molten steel. More specifically, the nickel contained in the nickel oxide increases the solubility of the copper into the slab (S). Nickel contained in nickel oxide causes a hypo-peritectic reaction in which the liquid and delta phases transform into gamma and liquid phases in the surface portion of the slab (S) where the Ni-enriched layer is formed. As a result, the solidification shrinkage of the slab (S) may be reduced while suppressing the surface cracks.

In this connection, in order that the Ni-enriched layer is easily formed by using the mold flux in the surface portion of the slab produced in the continuous casting process according to the present invention, and in order to form the Ni-enriched layer having a deeper thickness than the thickness of the oxide layer T(O_{xid}) from the surface of the slab formed during the casting process, the mold flux P may be introduced at a ratio of 0.1 kg to 1 kg per one ton of molten steel. That is, when the mold flux is added at less than 0.1 kg per one ton of molten steel, it is not easy to uniformly form the Ni-enriched layer on the entire surface portion of the slab, and, thus, the Ni-enriched layer may be locally formed in the slab surface portion. Further, if the mold flux is supplied at a content ratio of excess of 1 kg per one ton of molten steel, the concentration of Ni in the slab is greatly increased, whereby the slab having properties different from the desired properties of the slab may be cast. Thus, according to an embodiment of the present invention, the mold flux containing nickel oxide at the range of 10 wt% exclusive to 40 wt% may be introduced at a content ratio of 0.1 kg to 1 kg per one ton of the molten steel.

Referring to the bottom view of Figure 8, the slab S according to an embodiment of the present invention produced via the continuous casting method using the mold flux (P) described above may include the surface portion from an outermost surface of the slab to a predetermined distance therefrom inwardly in a thickness direction of the slab; and the inner portion from the predetermined distance to a middle point in the thickness direction of the slab, wherein a Ni concentration is higher in the surface portion than in the inner portion.

In this connection, the surface portion refers to the region from the outermost surface of the slab S to a predetermined distance inwardly in the thickness direction of the slab S. During the casting of molten steel, the solidified shell is formed first in the surface portion. The inner portion refers to the region excluding the surface portion of the slab S, and refers to the region from the predetermined distance to the middle point of the slab in the thickness direction. Therefore, the inner portion corresponds to the region excluding the region where the solidified shell is formed first when casting molten steel. More specifically, the surface portion of the slab S according to the present invention refers to the region in which the nickel oxide in the mold flux P injected onto the top face of the molten steel M is reduced to the nickel ion which in turn, diffuses inward from the outermost surface to the predetermined thickness. The inner portion refers to the region from the predetermined distance to the middle point of the slab in the thickness direction, and refers to the region into which the nickel ions may not diffuse.

In this connection, the concentration of Ni in the surface portion of the slab S may be at least 1.5 times the content of Cu in the base material. In this connection, if the Ni content is less than 1.5 times the Cu content, the liquid phase formation of Cu occurs at the heating temperature. However, if the Ni content is 1.5 times or more the Cu content, a solid phase, which is a gamma phase, appears, thereby preventing the formation of a single liquid phase containing Cu. That is, in the surface portion, the nickel oxide in the mold flux (P) is reduced to the Ni ions and, then, the resulting Ni ions diffuse from the outermost surface into the inside. This may be confirmed from FIG. 9, and, in FIG. 9, the Ni-enriched layer in the surface portion of the slab is shown. Thus, in the surface portion of the slab (S) according to the present invention, the Ni content is at least twice the Cu content, and, thus, it is possible to prevent the occurrence of defects due to penetration of the above-mentioned Cu into the grain boundary of the slab, and, thus, to compensate the oxide layer of the slab.

That is, referring to FIG. 10, the performance of the slab produced by the continuous casting method using the mold flux according to an embodiment of the present invention may be compared with that of the slab manufactured according to the prior art.

FIG. 10(a) shows a photograph and a schematic view of the slab produced by the continuous casting method using the mold flux according to the prior art, while FIG. 10(b) shows a photograph and a schematic diagram of the slab produced by the continuous casting method using the mold flux according to an embodiment of the present invention.

In this experiment, the slab was produced by using the mold flux containing 20 wt% of nickel oxide. In this connection, the steel species is a steel species containing 0.35 wt% of copper. Representative components of such steel species include carbon 0.1 wt%, Si 0.3 wt%, Mn 1.5 wt%, Ni 0.02 wt%, and Ti 0.03 wt%. In this connection, nickel (Ni) contained in the steel species is introduced due to contamination by ferroalloy. The nickel is contained the in molten steel at a very low content due to the ferroalloy. However, since, in order to realize the effect (Ni-enriched layer formation) according to the present invention, nickel should be contained more than 1.5 times as much as copper, the effect of Ni already contained in the molten steel may be ignored.

The states of the slab cast according to the prior art and the slab cast according to the present invention are as follows: referring to SEM photographs, which are scanning microscopes used to observe the section of the slab, and the results of EPMA as an electronic component analysis method used to confirm whether the Ni-enriched layer is formed in the surface portion of the slab, it may be seen that the copper component penetrates into the grain boundary of the slab according to the prior art. To the contrary, it may be seen that, as for the slab produced using the mold flux according to the present invention, the oxide layer and the Ni-enriched layer are overlapped in the surface portion of the slab S. Referring to the EPMA image, it may be seen that, as for the slab produced using the mold flux according to the present invention, the copper appears weakly in an outermost surface inside the Ni-enriched layer and cannot penetrate into the grain boundary.

## Claims

1. A continuous casting method for producing a slab by supplying molten steel to a mold, the method comprising:
forming a Ni coating layer made of a nickel oxide in a surface portion of the slab by supplying a mold flux onto a top face of the molten steel, wherein the mold flux contains SiO₂, CaO, MgO, Al₂O₃, Na₂O, F, and nickel (Ni) oxide, wherein the nickel (Ni) oxide has a content in a range from 10 wt% exclusive to 40 wt% with respect to a total weight of the mold flux,
wherein the molten steel contains copper,
wherein a Ni concentration in the surface portion is at least 1.5 times greater than a Cu concentration in the surface portion.

2. The method of claim 1, wherein the mold flux contains MgO at an amount of 1.0 to 1.5 wt%, Al₂O₃ at an amount of 5 to 7 wt%, Na₂O at an amount of 3 to 5 wt% and F at an amount of 5 to 7 wt%, respectively, based on the total weight of the mold flux, wherein the mold flux contains CaO and SiO₂.

3. The method of claim 2, wherein CaO content/SiO₂ content by weight is in a range of 0.8 to 1.4.

4. The method of claim 1, wherein the mold flux is injected into the molten steel at an injection ratio of 0.1 kg to 1 kg of the mold flux per 1000 kg of the molten steel.

## Patentansprüche

1. Stranggießverfahren zum Herstellen einer Bramme, indem schmelzflüssiger Stahl einer Form zugeführt wird, wobei das Verfahren umfasst:
Ausbilden einer aus Nickeloxid bestehenden Ni-Deckschicht in einem Oberflächenabschnitt der Bramme, indem einer Oberseite des schmelzflüssigen Stahls ein Formflussmittel zugeführt wird, wobei das Formflussmittel SiO₂, CaO, MgO, Al₂O₃, Na₂O, F und Nickel-(Ni)-Oxid enthält, wobei das Nickel-(Ni)-Oxid einen Gehalt in einem Bereich von 10 Gew.-% exklusiv bis 40 Gew.-% in Bezug auf ein Gesamtgewicht des Formflussmittels hat,
wobei der schmelzflüssige Stahl Kupfer enthält,
wobei eine Ni-Konzentration in dem Oberflächenabschnitt mindestens 1,5-mal höher ist als eine Cu-Konzentration in dem Oberflächenabschnitt.

2. Verfahren nach Anspruch 1, wobei das Formflussmittel jeweils MgO in einer Menge von 1,0 bis 1,5 Gew.-%, Al₂O₃ in einer Menge von 5 bis 7 Gew.-%, Na₂O in einer Menge von 3 bis 5 Gew.-% und F in einer Menge von 5 bis 7 Gew.-% auf Grundlage des Gesamtgewichts des Formflussmittels enthält, wobei das Formflussmittel CaO und SiO₂ enthält.

3. Verfahren nach Anspruch 2, wobei der CaO-Gehalt/SiO₂-Gehalt nach Gewicht in einem Bereich von 0,8 bis 1,4 liegt.

4. Verfahren nach Anspruch 1, wobei das Formflussmittel in den schmelzflüssigen Stahl mit einem Einspritzverhältnis von 0,1 kg bis 1 kg des Formflussmittels pro 1000 kg des schmelzflüssigen Stahls eingespritzt wird.

## Revendications

1. Procédé de coulée continue servant à produire une brame en amenant de l'acier fondu à une lingotière, le procédé comprenant :
la formation d'une couche de revêtement de Ni composée d'un oxyde de nickel dans une portion de surface de la brame en amenant un fondant de lingotière sur une face supérieure de l'acier fondu, sachant que le fondant de lingotière contient SiO2, CaO, MgO, Al₂O₃, Na₂O, F, et de l'oxyde de nickel (Ni), sachant que l'oxyde de nickel (Ni) a une teneur comprise dans une plage allant de 10 % en poids, à l'exception de 40 % en poids, par rapport à un poids total du fondant de lingotière,
sachant que l'acier fondu contient du cuivre,
sachant qu'une concentration en Ni dans la portion de surface est d'au moins 1,5 fois supérieure à une concentration en Cu dans la portion de surface.

2. Le procédé de la revendication 1, sachant que le fondant de lingotière contient MgO dans une quantité de 1,0 à 1,5 % en poids, Al₂O₃ dans une quantité de 5 à 7 % en poids, Na₂O dans une quantité de 3 à 5 % en poids et F dans une quantité de 5 à 7 % en poids, respectivement, sur la base du poids total du fondant de lingotière, sachant que le fondant de lingotière contient CaO et SiO₂.

3. Le procédé de la revendication 2, sachant que la teneur en CaO/teneur en SiO₂ en poids est comprise dans une plage de 0,8 à 1,4.

4. Le procédé de la revendication 1, sachant que le fondant de lingotière est injecté dans l'acier fondu à un taux d'injection de 0,1 kg à 1 kg du fondant de lingotière par 1000 kg de l'acier fondu.
